# EUROPEAN PATENT APPLICATION

(11) **EP 4 603 417 A1**
(43) Date of publication of application: **20.08.2025**
(21) Application number: 23955346.4
(22) Date of filing: 18.12.2023
(51) Int. Cl.: B65D 85/88

(54) **TRAY, FASTENING METHOD, AND BATTERY PRODUCTION LINE**

(30) Priority: 11.10.2023 CN 202311310257
(71) Applicant: CONTEMPORARY AMPEREX TECHNOLOGY (HONG KONG) LIMITED, Hong Kong (HK)
(72) Inventor: QIU, Shiping, Ningde, Fujian 352100 (CN)
(74) Representative: Kraus & Lederer PartGmbB
(86) International application number: PCT/CN2023/139620
(87) International publication number: WO 2025/077006

(57) **Abstract**

A tray, a clamping method, and a battery production line are provided. The tray is provided with a carrying region for carrying at least one workpiece, and the tray includes a base plate (1), a fixing plate (2), and a clamping assembly (3), where the fixing plate is arranged on a side of the base plate along a first direction and configured to block the workpiece. The clamping assembly includes two first clamping pieces (31) and at least one second clamping piece (32). The two first clamping pieces extend along the first direction and are spaced apart on two opposite sides of the base plate in a manner of moving towards each other along a second direction. The second clamping piece is arranged on a side opposite the fixing plate and located between the two first clamping pieces. The second clamping piece is configured to be capable of moving towards or away from the fixing plate along the first direction; and the first direction intersects with the second direction. The tray and the battery production line can adapt to workpieces with various different sizes and have good compatibility. The clamping method can carry and clamp workpieces with various sizes in a simple way.

## Description

### CROSS-REFERENCE TO RELATED APPLICATIONS

This disclosure claims priority to Chinese patent application No. 202311310257.2, filed on October 11, 2023 and entitled "TRAY, CLAMPING METHOD, AND BATTERY PRODUCTION LINE", which is incorporated herein by reference in its entirety.

### TECHNICAL FIELD

This disclosure relates to the technical field of battery manufacturing, and in particular, to a tray, a clamping method, and a battery production line.

### BACKGROUND

New energy batteries are increasingly widely used in life and industry. For example, new energy vehicles equipped with batteries have been widely used. In addition, batteries are increasingly used in the field of energy storage, and the like.

In the process of battery production and manufacturing, a battery usually needs to be carried by a tray and then be clamped and fixed, so as to be carried by the tray and be conveyed between various processes, preventing the battery from overturning and falling during conveyance. The batteries have many different varieties with various sizes. In addition, the industry imposes increasingly high requirements on the flexibility of battery production lines. Therefore, how to achieve adaptation to and compatibility with batteries of various sizes on the battery production line is one of the challenges in the industry.

### SUMMARY

To solve the above technical problems, an objective of this disclosure is to provide a tray, a battery production line, and a clamping method which can be compatible with batteries of various sizes and be simple in structure.

This disclosure is achieved by the following technical solutions.

A first aspect of this disclosure provides a tray. The tray is provided with a carrying region for carrying at least one workpiece. The tray includes: a base plate; a fixing plate arranged on a side of the base plate along a first direction is configured to block the workpiece; a clamping assembly including two first clamping pieces and at least one second clamping piece; where the two first clamping pieces extend along the first direction and are spaced apart on two opposite sides of the base plate in a manner of moving along a second direction, and the second clamping piece is arranged on a side opposite the fixing plate and located between the two first clamping pieces, and the second clamping piece is configured to be capable of moving towards or away from the fixing plate along the first direction; and the first direction intersects with the second direction.

As the tray is provided with the clamping assembly, the workpiece placed in the carrying region can be clamped with a simple structure and a simple action, so that the probability that the workpiece moves during the conveying process can be reduced, thereby reducing the possibility that the workpiece overturns or falls from the tray or the workpiece cannot complete the corresponding process operation due to the position change after reaching the corresponding process.

Because the clamping assembly of the tray includes the first clamping piece capable of moving along the second direction and the second clamping piece capable of moving along the first direction, workpieces with different sizes or different forms can be adapted by adjusting the positions of the first clamping piece and the second clamping piece along the first direction and the second direction, for example, the tray can be compatible for clamping single-row workpieces or double-row workpieces, which has good compatibility and is conducive to flexible production.

In addition, because a side of the tray along the first direction is further provided with the fixing plate, the workpiece can be blocked when the second clamping piece clamps along the first direction, so that the workpiece is prevented from falling off the tray during the clamping process, and the reliability of the tray is further improved.

In some embodiments, the tray includes a first screw rod extending along the second direction, and the first screw rod is rotatably arranged on the base plate and located below the carrying region. The two first clamping pieces are connected to the first screw rod and can move toward or away from each other along the first screw rod with the rotation of the first screw rod.

Therefore, the two first clamping pieces can move toward or away from each other along the second direction through the rotation of the first screw rod, so that the workpiece can be easily clamped along the second direction, the structure is simple, and the design is ingenious. Further, the screw rod transmission has high transmission efficiency and low energy consumption, which is more conducive to energy conservation and environmental protection. In addition, because the first screw rod is located below the carrying region, when the workpiece is placed in the carrying region, the first screw rod does not interfere with the workpiece, thus reducing the defects such as wobble and abrasion of the workpiece, and improving the carrying stability of the tray.

In some embodiments, the tray includes a guide rail extending along the second direction. The two first clamping pieces are supported on the guide rail and can move toward or away from each other along the guide rail.

Therefore, the two first clamping pieces can move toward or away from each other along the second direction by cooperating with the guide rail, so that the workpiece can be easily clamped along the second direction. The structure is simple, and the design is ingenious. In addition, the provision of the guide rail can reduce the friction and shaking of the first clamping piece when moving along the second direction, so that the movement of the first clamping piece is smoother and more stable, has higher reliability and low energy consumption, and is more conducive to energy conservation and environmental protection.

In some embodiments, the guide rails are provided in a quantity of two, and the two guide rails are spaced apart on both sides of the base plate along the first direction.

Therefore, the first clamping piece can be supported on the two guide rails, and the stability is higher, such that the first clamping piece can move along the second direction more smoothly by cooperating with the two guide rails, and the reliability and stability when the first clamping piece moves along the second direction are improved.

In some embodiments, the tray includes a second screw rod extending along the first direction, and the second screw rod is rotatably arranged on the base plate and located below the carrying region. The second clamping piece is arranged on the second screw rod and can move toward or away from the fixing plate along the second screw rod with the rotation of the second screw rod.

Therefore, the second clamping piece can move along the first direction through the rotation of the second screw rod, so that the workpiece can be easily clamped along the first direction, the structure is simple, and the design is ingenious. Further, the screw rod transmission has high transmission efficiency and low energy consumption, which is more conducive to energy conservation and environmental protection. In addition, because the second screw rod is located below the carrying region, when the workpiece is placed in the carrying region, the second screw rod does not interfere with the workpiece, thereby reducing the defects such as wobble and abrasion of the workpiece, and improving the carrying stability of the tray. In addition, because the second clamping piece moves along the first direction through the rotation of the second screw rod, the movement stroke of the second clamping piece can be controlled by driving the second screw rod through the driving apparatus based on the application scenario.

In some embodiments, the clamping assembly includes a clamping surface, where the clamping surface is configured to be in contact with a side surface of the workpiece. The first clamping piece further includes a supporting surface, where the supporting surface is configured to be in contact with part of a bottom surface of the workpiece. The clamping surface, a side surface of the fixing plate facing the second clamping piece, and the supporting surfaces of the two first clamping pieces define the carrying region.

Because the clamping assembly includes the clamping surface, the workpiece can be clamped by the contact between the clamping surface and the side surface of the workpiece, the structure is simple, and the clamping effect is good. In addition, because the first clamping piece further includes the supporting surface, the workpiece is supported on the supporting surface, and the stability of the workpiece placed in the carrying region can be improved, the interference of transmission pieces such as screw rods on the workpiece can be reduced, and the defects such as wobble and abrasion of the workpiece can be reduced. In this way, the workpiece is placed in the carrying region defined by the clamping surface, the supporting surface, and the like, which can improve the placement stability of the workpiece, reduce the overturning, falling, and the like of the workpiece in the conveying process, and improve the reliability of the tray.

In some embodiments, the second clamping piece is provided in a quantity of two, and the two second clamping pieces are spaced apart between the two first clamping pieces along the second direction.

Therefore, when two groups of workpieces with different sizes are carried on the tray, the two second clamping pieces can move by different distances respectively along the first direction according to the different sizes of each group of workpieces, so that the two groups of workpieces can be clamped well, and the two groups of workpieces with different sizes can be stably carried on the tray, improving the reliability and compatibility of the tray and being conducive to flexible production.

In some embodiments, the tray includes two second screw rods extending along the first direction, and the two second screw rods are arranged in parallel at intervals along the second direction; and the second clamping pieces each are respectively connected to one second screw rod, and the two second clamping pieces can move toward or away from the fixing plate along the second screw rods connected thereto.

Therefore, the two second clamping pieces can move along the first direction through the corresponding second screw rods, such that the movements of the two second clamping pieces do not interfere with each other. In this way, the two second clamping pieces can move by different distances along the first direction according to the sizes or forms of different workpieces, so that a plurality of groups of workpieces with different sizes carried on the tray can be clamped respectively, improving the adaptability, the compatibility of the tray, and the flexibility of the production line.

In some embodiments, the tray further includes a partition assembly, where the partition assembly includes a partition plate, the partition plate extends along the first direction, and the partition plate can be detachably arranged on the base plate; when the partition plate is arranged on the base plate, the partition plate is positioned between the two second clamping pieces and divides the carrying region into two carrying sub-regions, and the two carrying sub-regions each are configured to carry at least one workpiece, and the two second clamping pieces respectively move along the second screw rod in the two carrying sub-regions.

As the tray includes the partition assembly, the partition assembly can divide the carrying region of the tray into two carrying sub-regions. Therefore, when the tray carries two groups of workpieces, the two groups of workpieces can be placed in corresponding carrying sub-regions respectively and separated by the partition assembly, so that the two groups of workpieces do not interfere with each other and are placed more stably. In addition, because the partition plate of the partition assembly is detachably arranged on the base plate, users can mount or remove the partition plate based on actual needs, for example, when the tray carries a single-row workpiece, the partition plate is removed, and when the tray carries a double-row workpiece, the partition plate is mounted, so that the tray can be stably compatible with a plurality of groups of workpieces, improving the flexibility and compatibility.

In some embodiments, the clamping assembly includes a clamping surface, where the clamping surface is configured to be in contact with a side surface of the workpiece; the first clamping piece and the partition plate further include supporting surfaces, where the supporting surfaces are configured to be in contact with part of a bottom surface of the workpiece; and the partition plate has two supporting surfaces, where the two supporting surfaces are located at two opposite sides of the partition plate along the second direction.

Because the clamping assembly includes the clamping surface, the workpiece can be clamped by the contact between the clamping surface and the side surface of the workpiece, the structure is simple, and the clamping effect is good. In addition, because the first clamping piece and the partition plate further include the supporting surfaces, the workpiece is supported on the supporting surface, so that the stability of the workpiece placed in the carrying region can be improved, the interference of transmission pieces such as screw rods on the workpiece can be reduced, and the defects such as wobble and abrasion of the workpiece can be reduced. In this way, when the tray carries a plurality of groups of workpieces, the workpiece is placed in the carrying sub-region defined by the clamping surface, the supporting surface, and the like, which can improve the placement stability of the workpiece, reduce the overturning, falling, and the like of the workpiece in the conveying process, and improve the reliability of the tray.

In some embodiments, the partition assembly further includes a pin; the partition plate is provided with a run-through hole, and the base plate is provided with a through hole; when the partition plate is arranged on the base plate, the pin penetrates through the run-through hole and the through hole to fix the partition plate to the base plate.

Therefore, the partition plate can be easily fixed on the base plate through the cooperation of the pin with the run-through hole and the through hole, thereby dividing the carrying region into a plurality of carrying sub-regions, which is more conducive to the placement and clamping of a plurality of groups of workpieces. In addition, the pin is simple in structure and easy to mount and remove, which is convenient for users to mount and remove the partition plate, so that the partition plate can be detachably mounted on the base plate, and the assembly cost is effectively reduced.

In some embodiments, the pin, the run-through hole and the through hole are provided in plurality; a plurality of run-through holes are spaced apart on the partition plate along the first direction, and a plurality of through holes are spaced apart on the base plate along the first direction.

Therefore, the stability of the partition plate on the base plate can be improved, so that the partition plate can be more stably mounted on the base plate, the possibility that the workpiece cannot be clamped well due to the deviation of the partition plate is reduced, and the placement reliability of the workpiece is improved.

In some embodiments, the intersection includes a vertical intersection.

Therefore, the workpiece can be clamped along two vertical directions in a plane, which is especially suitable for clamping the workpiece with a cuboid shape.

A second aspect of this disclosure provides a clamping method for clamping a workpiece by using a tray, where the tray is provided with a carrying region and includes a base plate, a fixing plate arranged on the base plate, and a clamping assembly, and the clamping assembly includes two first clamping pieces and at least one second clamping piece. The clamping method includes: a placement step of placing the workpiece in the carrying region of the tray; and a clamping step of moving two first clamping pieces towards each other along a second direction to clamp along a second direction, and moving the second clamping piece towards the fixing plate along the first direction to clamp along the first direction.

Therefore, the workpiece can be easily fixed and clamped using the tray, so that the placement stability of the workpiece can be improved, and the workpiece can be smoothly conveyed between various processes. Further, the workpieces with different sizes can be adapted by adjusting the positions of the first clamping piece and the second clamping piece, which has good compatibility and is conducive to flexible production.

In some embodiments, the tray further includes a partition assembly, and the partition assembly includes a partition plate and a pin. The partition plate is provided with a run-through hole, and the base plate is provided with a through hole; Before the placement step, the clamping method further includes a partition plate mounting step of enabling the pin to pass through the run-through hole and the through hole, thereby fixedly mounting the partition plate on the base plate.

Therefore, when a plurality of groups of workpieces are carried on the tray, each group of workpieces can be separated in different carrying sub-regions by fixedly mounting the partition plates on the base plate, so that each group of workpieces do not interfere with each other, and the placement is more stable, which allows the tray to be stably compatible with a plurality of groups of workpieces and have better flexibility.

In some embodiments, the workpiece includes at least one of a battery or a battery unit formed by two or more two batteries.

Therefore, the clamping method using the tray can be used for clamping and fixing the batteries and can be compatible with batteries with different sizes, for example, single-row batteries and double-row batteries, thus improving the compatibility of the clamping method and the production method of the whole production line.

A third aspect of this disclosure provides a battery production line, where the battery production line includes: at least one tray according to the first aspect of this disclosure, and the tray is configured for carrying a workpiece, and the workpiece includes at least one of a battery or a battery unit formed by two or more batteries; and a conveying apparatus for conveying the tray.

Because the workpiece is placed and clamped on the tray and can be conveyed by the conveying apparatus, the workpiece can be placed and clamped with a simple structure and a simple action, which is conducive to the stable conveying of the workpiece between different processes of the battery production line. Further, the tray can adapt to the placement and clamping of workpieces with different sizes, and has good compatibility, improving the flexible production of the whole battery production line.

In addition, the tray can be configured for clamping and fixing batteries, and the tray can be compatible with batteries with different sizes, for example, the tray can be compatible with single-row batteries and double-row batteries, thus improving the compatibility of the tray and the whole battery production line.

In some embodiments, the battery production line further includes a manipulator, where the manipulator is configured to place the workpiece on or remove the workpiece from the tray.

Therefore, the automation of the battery production line can be improved and the production efficiency of the whole line can be improved.

The embodiments of this disclosure have the following beneficial effects.

This disclosure provides a tray, a clamping method, and a battery production line with good compatibility and simple structure.

### BRIEF DESCRIPTION OF DRAWINGS

Persons of ordinary skill in the art can clearly understand various other advantages and benefits by reading the detailed description of the preferred embodiments below. The drawings are merely intended to illustrate the preferred embodiments, but not to limit this disclosure. Moreover, throughout the accompanying drawings, the same reference signs represent the same parts. In the accompanying drawings
FIG. 1 is a three-dimensional structural schematic diagram of a tray according to some embodiments of this disclosure;
FIG. 2 is a schematic diagram of a planar structure of a tray according to some embodiments of this disclosure;
FIG. 3 is a schematic diagram of a planar structure of a tray according to some embodiments of this disclosure from another perspective;
FIG. 4 is a three-dimensional structural schematic diagram of a tray provided with a partition plate according to some embodiments of this disclosure;
FIG. 5 is a schematic diagram of a planar structure of a tray provided with the partition plate according to some embodiments of this disclosure;
FIG. 6 is a three-dimensional structural schematic diagram of the partition plate according to some embodiments of this disclosure;
FIG. 7 is a schematic planar diagram of workpieces that can be carried by a tray according to some embodiments of this disclosure, where figures (a) to (d) respectively show workpieces with different forms; and
FIG. 8 is a schematic flowchart of a clamping method according to some embodiments of this disclosure.

### Description of reference signs:

1. base plate; 11. through hole; 2. fixing plate; 3. clamping assembly; 31. first clamping piece; 32. second clamping piece; 321. meshing piece; 33. clamping surface; 34. supporting surface; 4. first screw rod; 5. guide rail; 6. second screw rod; 7. partition assembly; 71. partition plate; 711. run-through hole; 712. protruding portion; 72. pin; 10. battery; 100. tray; 101. carrying region; and 102. carrying sub-region.

### DESCRIPTION OF EMBODIMENTS

Embodiments of the technical solutions of this disclosure are described in detail below with reference to the drawings. The following embodiments are merely intended to describe the technical solutions of this disclosure more clearly, and are merely exemplary but without hereby limiting the protection scope of this disclosure.

Unless otherwise defined, all technical and scientific terms used herein have the same meanings as normally understood by persons skilled in the technical field of this disclosure. The terms used herein are merely intended to describe specific embodiments and but not to limit this disclosure. The terms "include" and "contain" and any variations thereof in this disclosure are intended as non-exclusive inclusion.

In the description of the embodiments of this disclosure, the technical terms "first", "second" and "third" are merely intended to distinguish between different items but not intended to indicate or imply relative importance or implicitly specify the quantity of the indicated technical features, specific order, or order of precedence. In the description of the embodiments of this disclosure, unless otherwise expressly specified, "a plurality of" means two or more.

Reference to "embodiment" herein means that a specific feature, structure or characteristic described with reference to the embodiments may be included in at least one embodiment of this disclosure. Reference to this term in different places in the specification does not necessarily represent the same embodiment, nor does it represent an independent or alternative embodiment in a mutually exclusive relationship with other embodiments. Persons skilled in the art explicitly and implicitly understand that the embodiments described herein may be combined with other embodiments.

In the description of the embodiments of this disclosure, the term "and/or" is only an associative relationship for describing associated objects, indicating that three relationships may be present. For example, A and/or B may indicate the following three cases: presence of only A, presence of both A and B, and presence of only B.

In the description of the embodiments of this disclosure, direction or a positional relationship indicated by the terms such as "length", "width", "thickness", "up", "down", "before", "after", "left", "right", "vertical", "horizontal", "top", "bottom", "in", "out" and "clockwise" is a direction or positional relationship based on the illustration in the drawings, and is merely intended for ease or brevity of description of the embodiments of this disclosure, but not intended to indicate or imply that the indicated apparatus or component is necessarily located in the specified direction or constructed or operated or used in the specified direction. Therefore, such terms are not to be understood as a limitation on embodiments of this disclosure.

In the description of the embodiments of this disclosure, unless otherwise explicitly provided and limited, the technical terms such as "mounting", "connection", "join", and "fastening" should be understood broadly, which, for example, may refer to a fixed connection, a detachable connection, or an integral connection; which may refer to a mechanical connection or an electrical connection; which may refer to a direct connection or an indirect connection via an intermediate medium; which may also refer to a communication between the insides of two elements, or an interaction relationship between two elements. For those of ordinary skill in the art, the specific meanings of the above-mentioned terms in the embodiments of this disclosure may be understood based on specific situations.

In the description of the embodiments of this disclosure, unless otherwise explicitly provided and limited, the technical term "contact" should be broadly understood, which may be direct contact, contact through an intermediate medium layer, contact with no interaction force between the two in contact, or contact with interaction force between the two in contact.

The following makes a detailed description of this disclosure.

At present, new energy batteries are increasingly widely used in life and industry. The new energy batteries are not only used in energy storage power systems such as hydro, thermal, wind, and solar power stations, but also widely used in electric transport such as electric bicycles, electric motorcycles, and electric vehicles, and used in many other fields such as aerospace. The market demand for traction batteries keeps soaring with the increase of the application fields of the power batteries.

In a process of manufacturing batteries, batteries or battery units usually need to be carried by a tray, and the tray drives the batteries or the battery units to be conveyed between various processes of the battery production line. When conveying between various processes, the tray may accelerate, decelerate, steer, brake, or the like. So in the conveying process of each process, the batteries or battery units placed on the tray need to be clamped and fixed, thereby avoiding the situation that the batteries or battery units are overturned or dropped in the conveying process, which leads to the damage of the batteries or battery units and further avoids the situation that the batteries or battery units cannot successfully complete the corresponding process operation due to the position change after reaching the corresponding process.

To meet different product requirements, battery manufacturers usually need to manufacture battery products with various specifications, so batteries or battery units have various forms and sizes, for example, there is a form that single-row batteries assembled into a pack (also known as "single-row module"), and there is another form that two or more batteries bonded to form a battery unit, and a plurality of battery units are assembled into a pack (also known as "double-row module" or "multi-row module"). However, the existing trays involve relative few forms, which can only be configured for clamping and fixing batteries or battery units with a single size or a single form, so its versatility is poor. When clamping and fixing batteries or battery units with different sizes or different forms, a plurality of trays of different models need to be prepared to meet the use requirement. Further, when replacing trays of different models, the corresponding process or the operation of the whole production line needs to be stopped to replace the trays, which increases the operation steps and is time-consuming and complicated, and is not conducive to improving production efficiency. In addition, a large temporary store space needs to be arranged on the production line to store trays of various types, which is space-consuming and is not conducive to improving space utilization rate and restraining production costs.

In view of the foregoing problem in the related art, this disclosure provides a tray provided with a carrying region for carrying at least one workpiece. The tray includes a base plate, a fixing plate, and a clamping assembly. The fixing plate is arranged on a side of the base plate along a first direction and configured to block the workpiece. The clamping assembly includes two first clamping pieces and at least one second clamping piece. The two first clamping pieces extend along the first direction, are spaced apart on two opposite sides of the base plate in a manner of moving towards each other along a second direction. The second clamping piece is arranged on a side opposite to the fixing plate and located between the two first clamping pieces. The second clamping piece is further configured to be capable of moving towards or away from the fixing plate along the first direction; and the first direction intersects with the second direction.

As the tray in this embodiment of this disclosure is provided with the clamping assembly the workpiece placed in the carrying region can be clamped with a simple structure and a simple action, so that the probability that the workpiece moves in the conveying process can be reduced, thereby reducing the possibility that the workpiece overturns or falls from the tray or the workpiece cannot complete the corresponding process operation due to the position change. A quantity of required components is less, thus effectively reducing the assembly difficulty of the tray and reducing the production cost. In addition, workpieces with different sizes or different forms can be adapted by adjusting the positions of the first clamping piece and the second clamping piece along the first direction and the second direction, for example, the tray can be compatible for clamping single-row workpieces or double-row workpieces, which has good compatibility and is conducive to flexible production. Further, due to the good compatibility of the tray, there is no need to reserve a large cushion space to accommodate trays with different sizes, which is conducive to improving the space utilization rate.

The tray of the embodiments of this disclosure can be used in the battery production process, for example, for placing and clamping batteries or battery units. Certainly, persons skilled in the art understand that the tray provided in the embodiments of this disclosure is not only configured for placing and clamping various workpieces in the battery manufacturing process, but also configured for placing and clamping other workpieces that need to be placed and clamped.

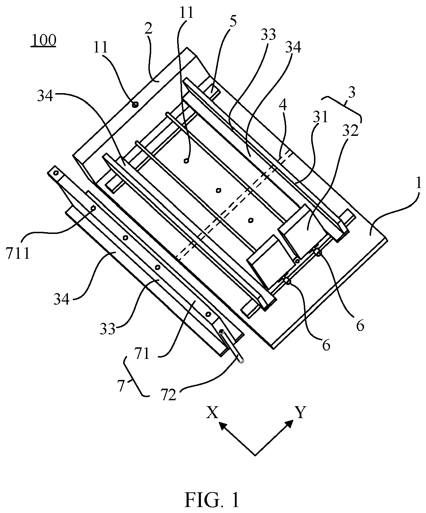

Hereinafter, some embodiments of this disclosure is described in detail with reference to FIGs. 1 to 8.

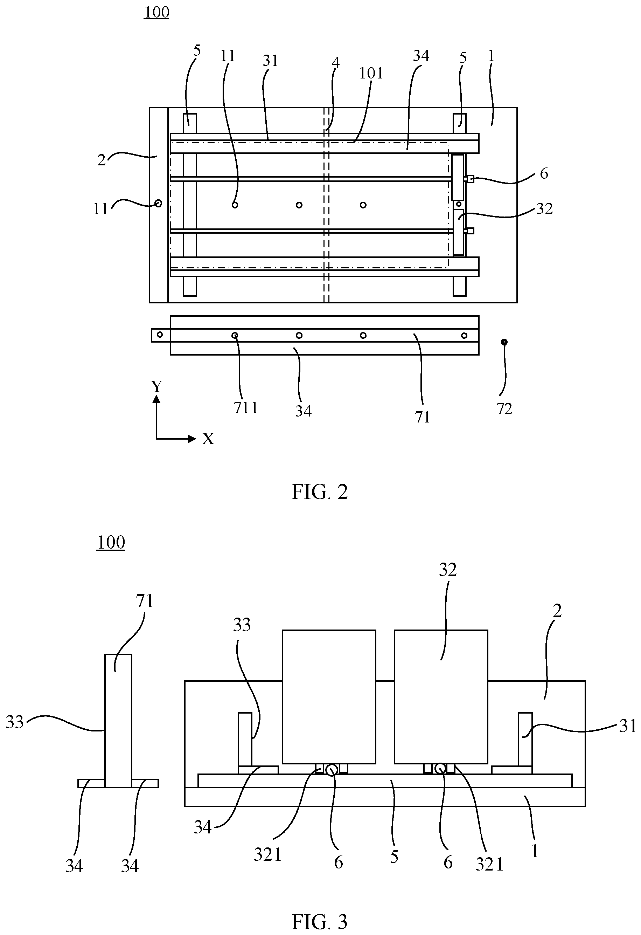

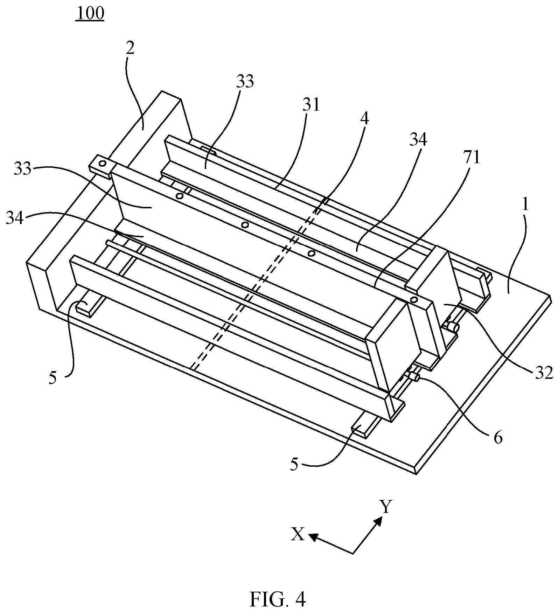

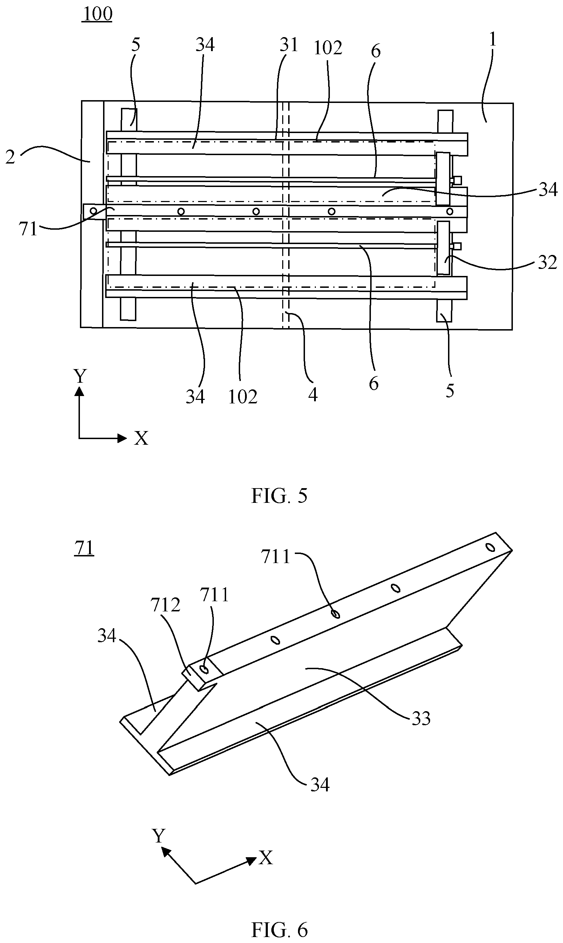

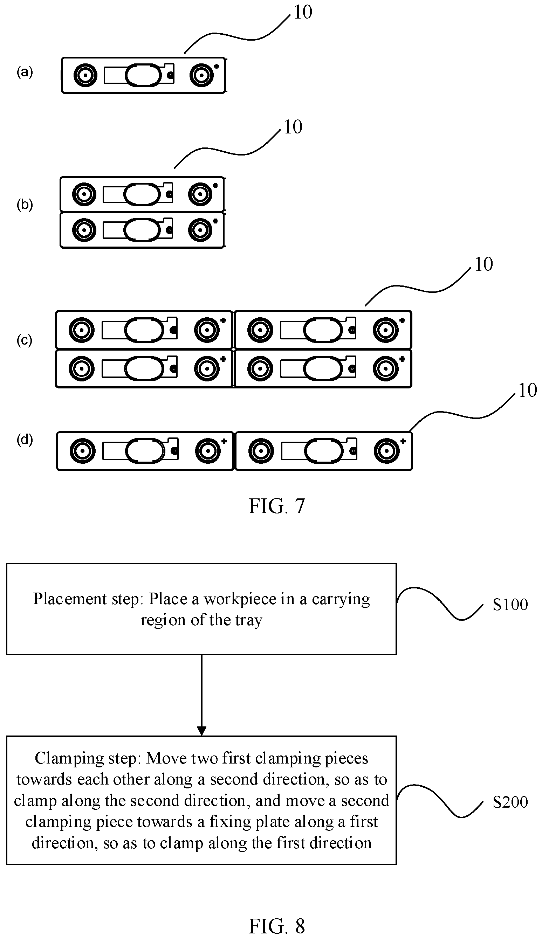

FIG. 1 is a three-dimensional schematic structural diagram of a tray according to some embodiments of this disclosure. FIG. 2 is a planar schematic structural diagram of a tray according to some embodiments of this disclosure. FIG. 3 is a planar schematic structural diagram of a tray according to some embodiments of this disclosure from another perspective. FIG. 4 is a three-dimensional schematic structural diagram of a tray provided with a partition plate according to some embodiments of this disclosure. FIG. 5 is a planar schematic structural diagram of a tray provided with a partition plate according to some embodiments of this disclosure. FIG. 6 is a three-dimensional schematic structural diagram of a partition plate according to some embodiments of this disclosure. FIG. 7 is a planar schematic structural diagram of workpieces that can be carried by a tray according to some embodiments of this disclosure, where figures (a) to (d) respectively show workpieces with different forms. FIG. 8 is a schematic flowchart of a clamping method according to some embodiments of this disclosure.

In some embodiments of this disclosure, for ease of description, a first direction and a second direction are set, and the first direction and the second direction intersect each other, and the intersection herein includes a vertical intersection. For ease of understanding of the embodiments of this disclosure, in the embodiments shown in FIGs. 1 to 8, the description is made by taking an example that the first direction and the second direction are perpendicular to each other, but persons skilled in the art should understand that the embodiments of this disclosure are not limited to the case that the two directions vertically intersect each other. For ease of description, as shown by the arrows in FIGs. 1, 2, and 4 to 6, the direction where the arrow X located is the first direction (also called the length direction) and the direction where the arrow Y is located is the second direction (also called the width direction).

As shown in FIGs. 1 to 5, a first aspect of this disclosure provides a tray 100, where the tray 100 is provided with a carrying region 101 for carrying at least one workpiece. The tray 100 includes a base plate 1, a fixing plate 2, and a clamping assembly 3. The fixing plate 2 is arranged on a side of the base plate 1 along a first direction, and the fixing plate 2 is configured to block the workpiece. The clamping assembly 3 includes two first clamping pieces 31 and at least one second clamping piece 32. The two first clamping pieces 31 extend along the first direction, and the two first clamping pieces 31 are spaced apart on two opposite sides of the base plate 1 in a manner of moving towards each other along a second direction. The second clamping piece 32 is arranged on a side opposite the fixing plate 2 and located between the two first clamping pieces 31, and the second clamping piece 32 is configured to be capable of moving towards or away from the fixing plate 2 along the first direction; and the first direction intersects with the second direction.

**In** the manufacturing process of products such as batteries, the batteries or battery units usually need to be carried by a tray, and the tray drives the batteries or the battery units to be conveyed between various processes of the battery production line. The tray 100 of the embodiments of this disclosure is an apparatus capable of carrying and clamping a workpiece. As shown in FIG. 2, the tray is provided with a carrying region 101, and the carrying region 101 refers to a region of the tray 100 for placing and clamping workpieces. The "clamping" in the embodiments of this disclosure means that the workpiece carried on the tray 100 does not move relative to the tray 100.

**In** some embodiments of this disclosure, as shown in FIG. 7, the workpiece may be, for example, a battery 10, a battery unit formed by two or more batteries 10, or the like. Certainly, in some other embodiments, the workpiece can alternatively be any other workpiece to be conveyed and clamped. A prismatic battery shown in figure (a) of FIG. 7 is used as an example. A battery unit formed by two or more batteries 10 may be a battery unit formed by bonding larger surfaces of two batteries 10 as shown in figure (b) of FIG. 7, or a battery unit formed by bonding side surfaces of two batteries 10 as shown in figure (d) of FIG. 7, or a battery unit formed by bonding four batteries 10 in pairs as shown in figure (c) of FIG. 7. Certainly, neither the workpiece unit nor the battery unit is not limited to the form shown in FIG. 7. The combination method of two or more batteries 10 is not limited to bonding, and may be other methods such as mechanical connection.

In the embodiments of this disclosure, the battery 10 may be a battery cell.

A battery cell refers to a basic unit that can realize the mutual conversion between chemical energy and electric energy, and can be used for manufacturing a battery module or a battery pack, so as to supply power to an electric apparatus.

The battery cell may be a secondary battery, and the secondary battery is a battery cell that is reusable through activation of an active material in the battery cell by charging the battery cell that is discharged.

The battery cell may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead storage battery, or the like. The specific type of the battery cell is not limited in the embodiments of this disclosure.

Although not shown in the figure, a battery cell typically includes an electrode assembly. The electrode assembly includes a positive electrode, a negative electrode, and a separator. During charging and discharging of the battery cell, active ions (such as lithium ions) intercalate and deintercalate back and forth between the positive electrode and the negative electrode. The separator is arranged between the positive electrode and the negative electrode to prevent short circuit of the positive electrode and negative electrode and to allow the active ions to pass through.

In some embodiments, the battery cell further includes an electrolyte, and the electrolyte serves to conduct ions between the positive electrode and the negative electrode. The type of the electrolyte is not particularly limited in this disclosure, and may be selected as required. The electrolyte may be in a liquid state, gel state, or solid state.

In some embodiments, the battery cell may include a shell. The shell is configured to package components such as the electrode assembly and the electrolyte. The shell may be a steel shell, an aluminum shell, a plastic shell (for example, polypropylene), a composite metal shell (for example, a copper-aluminum composite shell), or an aluminum laminated film.

As an example, the battery cell may be a cylindrical cell, a prismatic cell, a pouch cell, or a battery cell in another shape. The prismatic cell includes a square-shell battery cell, a blade battery cell, and a polygonal prism battery. An example of the polygonal prism battery is a hexagonal prism battery. This is not particularly limited in this disclosure.

In some embodiments, the shell includes an end cover and a housing, the housing is provided with an opening, and the end cover closes the opening to form a closed space for accommodating the electrode assembly and substances such as the electrolyte. The housing may be provided with one or more openings. One or more end covers may be provided.

In some embodiments, at least one electrode terminal is arranged on the shell, and the electrode terminal is electrically connected with a tab. The electrode terminal may be directly connected to the tab or indirectly connected to the tab through an adapter. The electrode terminal may be arranged on the end cover or may be arranged on the housing.

In some embodiments, the housing is provided with a pressure relief mechanism. The pressure relief mechanism is configured to release the internal pressure of the battery cell.

In the embodiments of this disclosure, the battery 10 may alternatively be a single physical module including one or more battery cells to provide higher voltage and capacity. When there are a plurality of battery cells, the plurality of battery cells are connected in series, in parallel or in series -parallel by a busbar component.

The tray 100 of the embodiments of this disclosure is described with reference to the drawings. As shown in FIGs. 1 to 5, the tray 100 includes a base plate 1, a fixing plate 2, and a clamping assembly 3.

The base plate 1 serves as a carrying structure of the tray 100, and a material of the base plate 1 may be plastic, profile or any other suitable material. The base plate 1 includes a carrying surface for carrying various functional components that realize functions of the tray 100. The carrying surface of the base plate 1 is flat, thereby providing a stable carrying platform for the various functional components.

In the embodiments of this disclosure, the carrying surface of the base plate 1 is approximately rectangular. In some other embodiments, the carrying surface of the base plate 1 may alternatively be in any other suitable shape such as square, circle or polygon. As long as various functional components can be stably carried. The embodiments of this disclosure do not specifically limit the shape of the carrying surface of the base plate 1.

The fixing plate 2 is arranged on a side of the base plate 1 along a first direction and configured to block the workpiece placed in the carrying region 101, preventing the workpiece from falling off the tray 100 during clamping, and improving the reliability of the tray 100.

In the embodiments of this disclosure, the fixing plate 2 is approximately rectangular. In some other embodiments, the fixing plate 2 may alternatively be in any other suitable shape such as a square plate. The embodiments of this disclosure do not specifically limit the shape of the fixing plate 2 as long as the fixing plate 2 can block the workpiece.

Exemplarily, the fixing plate 2 may be formed as an integrated structure with the base plate 1.

For another example, the fixing plate 2 and the base plate 1 may be discrete structures and can be assembled together.

The clamping assembly 3 is configured to clamp and fix the workpiece placed in the carrying region 101. In the manufacturing process, due to the limited friction of a contact surface between the workpiece and the tray 100, the workpiece tends to move relative to the tray under the effect of external vibration and the inertia of the workpiece itself, so the workpiece may be damaged due to overturning or falling.

As the tray 100 of the embodiments of this disclosure is provided with the clamping assembly 3, the workpiece placed in the carrying region 101 can be clamped with a simple structure and a simple action, so that the probability that the workpiece moves during the conveying process can be reduced, thereby reducing the possibility that the workpiece overturns or falls from the tray 100 and cannot complete the corresponding process operation due to the position change after reaching the corresponding process.

The clamping assembly 3 includes two first clamping pieces 31. The two first clamping pieces 31 extend along the first direction, and two first clamping pieces 31 are spaced apart from on two opposite sides of the base plate 1 in a manner of moving along the second direction. In this way, the size of the carrying region 101 along a width direction (the second direction) can be changed by adjusting the strokes of the two first clamping pieces 31 moving towards or moving away from each other along the second direction, so as to adapt to workpieces with different width sizes and different arrangement forms (for example, two or more rows of workpieces are arranged in parallel along the width direction).

The embodiments of this disclosure do not specifically limit the movement method of the first clamping pieces 31, as long as the two first clamping pieces 31 can move toward or away from each other along the second direction, so as to clamp the workpiece along the second direction.

Exemplarily, the two first clamping pieces 31 can move along the second direction by means of, for example, screw rod transmission or guide rail-slide block transmission.

The clamping assembly 3 further includes at least one second clamping piece 32, where the second clamping piece 32 may be rectangular and flat, for example, the second clamping piece 32 is arranged on a side opposite to the fixing plate 2 and located between the two first clamping pieces 31. The second clamping piece 32 can move toward or away from the fixing plate 2 along the first direction. In this way, the size of the carrying region 101 along the length direction (the first direction) can be changed by adjusting the stroke of the second clamping piece 32 approaching or leaving the fixing plate 2 along the first direction, so as to adapt to workpieces with different length sizes and different arrangement forms (for example, two or more rows arranged in parallel along the length direction).

The second clamping piece 32 is arranged on the side opposite to the fixing plate 2, so when the workpiece is clamped along the first direction, the workpiece is blocked by the fixing plate 2, so that the workpiece can be prevented from falling off the tray 100 during the clamping process.

The embodiments of this disclosure also do not specifically limit the movement method of the second clamping piece 32, as long as the second clamping piece 32 can reciprocate along the first direction, so as to clamp the workpiece along the first direction.

Exemplarily, the second clamping piece 32 can move along the first direction by, for example, a screw rod transmission or a guide rail-slide block transmission.

The embodiments of this disclosure do not specifically limit the quantity of the second clamping pieces 32. In the embodiments of this disclosure, the second clamping piece 32 is provided in a quantity of two, and the two second clamping pieces 32 are space apart along the second direction, so that two groups of different workpieces can be clamped along the first direction, respectively. In some other embodiments, the number of the second clamping pieces 32 can be one or more (more than two), which can be specifically defined based on the actual situation (such as the size of the tray or the processing difficulty).

Persons skilled in the art should understand that since the second clamping piece 32 is located between the two first clamping pieces 31, the width of the second clamping piece 32 along the second direction should be smaller than the width of the workpiece to be carried along the second direction, so that the second clamping piece 32 does not interfere with the clamping operation of the first clamping pieces 31 along the second direction, and the defect that the first clamping piece 31 cannot clamp the workpiece due to the contact with the second clamping piece 32 in the clamping process can be prevented.

Because the clamping assembly 3 of the tray 100 includes the first clamping piece 31 capable of moving along the second direction and the second clamping piece 32 capable of moving along the first direction, workpieces with different sizes or different forms can be adapted by adjusting the positions of the first clamping piece 31 and the second clamping piece 32 along the first direction and the second direction, for example, the tray 100 can be compatible for clamping single-row workpieces or double-row workpieces, which has good compatibility and is conducive to flexible production.

In some embodiments of this disclosure, the tray 100 includes a first screw rod 4 extending along the second direction, and the first screw rod 4 is rotatably arranged on the base plate 1 and located below the carrying region 101. The two first clamping pieces 31 are connected to the first screw rod 4 and can move toward or away from each other along the first screw rod 4 with the rotation of the first screw rod 4.

The screw rod is a transmission piece that can convert rotary motion into linear motion. Because the two first clamping pieces 31 are connected to the first screw rod 4 and can move toward or away from each other along the second direction with the rotation of the first screw rod 4, so that the workpiece can be easily clamped along the second direction. The structure is simple, and the design is ingenious.

In the embodiments of this disclosure, the two first clamping pieces 31 are connected to the same first screw rod 4, so that the two first clamping pieces 31 can move in pairs. In some other embodiments, two first screw rods 4 are provided, and the two first clamping pieces 31 are connected to one first screw rod 4, so that the movement strokes of the two first clamping pieces 31 along the second direction may be different. When the tray 100 carries a plurality of groups of workpieces, the corresponding strokes can be adjusted along the second direction according to the sizes or forms of different groups of workpieces, and the pressing operation can be conducted.

Exemplarily, the base plate 1 can be provided with a recessed groove extending along the second direction, the recessed groove is located below the carrying region 101, and the first screw rod 4 can be rotatably arranged in the recessed groove.

Accordingly, the first screw rod 4 is located below the carrying region 101, and when the workpiece is placed in the carrying region 101, the workpiece is not interfered, so that defects such as wobble and abrasion caused by collision of the workpiece with the first screw rod 4 can be reduced, thereby improving the carrying stability of the tray 100.

A meshing piece (not shown in the figure) is arranged below the first clamping piece 31, and the meshing piece can be integrated with the first clamping piece 31, or can be separated from the first clamping piece 31 and assembled together. For example, the meshing piece can be a nut meshed with the first screw rod 4, so that the first clamping piece 31 can cooperate with the first screw rod 4 through the meshing piece, and can make the two first clamping pieces 31 move toward each other or away from each other along the first screw rod 4 by changing the rotation direction of the first screw rod 4. In addition, the first screw rod 4 and the meshing piece can also have a mutual self-locking function, thereby reducing the risk of accidental movement of the first clamping piece 31.

When a workpiece is placed on the tray 100, the first screw rod 4 is driven to rotate first, so that the two first clamping pieces 31 move away from each other, and a large carrying region 101 is reserved. After the workpiece is placed in the carrying region 101, the first screw rod 4 is driven to rotate in an opposite direction, so that the two first clamping pieces 31 move toward each other until they are in contact with the workpiece, thereby clamping the workpiece along the second direction. The clamping here can also be a clamping with a certain pre-tightening force.

Exemplarily, the first screw rod 4 can be driven to rotate by the driving apparatus, such that the two first clamping pieces 31 can move linearly along the first screw rod 4, and the rotation direction of the first screw rod 4 can be changed by the driving apparatus, such that the two first clamping pieces 31 can move toward or move away from each other. The driving apparatus includes but is not limited to a motor. As a specific example, a servo motor can be used.

For another example, the first screw rod 4 can alternatively be driven to rotate or change the rotation direction through manual rotation by the user or through rotation by a tightening apparatus, such that the two first clamping pieces 31 can move toward or move away from each other along the first screw rod 4.

The screw rod transmission has high transmission efficiency and low energy consumption, and the rotation of the first screw rod 4 drives the two first clamping pieces 31 to move toward or away from each other, which is more conducive to energy conservation and environmental protection.

It should be understood by persons skilled in the art that the movement of the first clamping piece 31 along the second direction is not limited to the formation of a kinematic pair of a screw rod and a nut, as long as the two first clamping pieces 31 can move toward or away from each other along the second direction, for example, the movement of the first clamping piece 31 can alternatively be rack-and-pinion transmission, chain drive, belt transmission, or the like.

In some embodiments, for example, the tray 100 may further include an elastic component (not shown in the figure), the elastic component is arranged on a surface of the first clamping piece 31 facing away from the carrying region 101. When the two first clamping pieces 31 are driven by the rotation of the first screw rod 4 to move away from each other, the elastic component is compressed, and when the first screw rod 4 stops driving, the elastic component releases the compression amount to provide an elastic force opposite to the compression direction. The two first clamping pieces 31 can move toward each other under the action of elastic force to perform clamping operation. Thus, when the movement stroke of the first clamping pieces 31 along the second direction is adjusted, the first screw rod 4 can always rotate in one direction, and when the clamping operation (the two first clamping pieces move toward each other) needs to be conducted, the driving from the first screw rod 4 only needs to be stopped. That is, the reciprocating motion of the first clamping piece 31 along the second direction can be realized without changing the rotation direction of the first screw rod 4.

Exemplarily, the elastic component can be, for example, a nitrogen spring, and the nitrogen spring uses high-pressure nitrogen as a working medium. The nitrogen spring can achieve a large elastic force in a small volume and smooth operation, and the elastic force curve is flat, so that the damage to the workpiece during clamping is not easily caused.

As another example, the elastic component can alternatively be a spring, an elastic sheet, or the like.

In some embodiments of this disclosure, the tray 100 includes a guide rail 5 extending along a second direction. The two first clamping pieces 31 are supported on the guide rail 5 and can move toward or away from each other along the guide rail 5.

The guide rail 5 may be a groove or ridge made of metal or other suitable materials, which is mainly used in the situation of linear reciprocating motion. The guide rail 5 can withstand, fix, guide, or move components or apparatuses, and reduce the friction when moving. The two first clamping pieces 31 are supported on the guide rail 5, so that the two first clamping pieces 31 can move toward or away from each other along the second direction by cooperating with the guide rail 5, so that the workpiece can be easily clamped along the second direction. The structure is simple, and the design is ingenious.

A sliding piece (not shown in the figure) is arranged below the first clamping piece 31, and the sliding piece can be integrated with the first clamping piece 31, or can be separated from the first clamping piece 31 and assembled together. The sliding piece includes but is not limited to a sliding plate, a sliding block, a sliding rod, or a sliding assembly composed of a plurality of structures.

In the embodiments of this disclosure, the guide rail 5 has a ridge-shaped protruding structure, the sliding piece is provided with a groove, and the first clamping piece 31 can reciprocate along the guide rail 5 through the cooperation between the groove and the protruding structure.

In some other embodiments, the guide rail 5 may alternatively be groove-shaped, and the sliding piece is provided with a protrusion, and the first clamping piece 31 can reciprocate along the guide rail 5 through the cooperation between the protrusion and the groove.

Exemplarily, the sliding piece can be driven by the driving apparatus to reciprocate along the guide rail 5, thereby driving the first clamping piece 31 to reciprocate along the guide rail 5. The driving apparatus includes but is not limited to a motor.

As another example, the sliding piece can alternatively be manually adjusted by the user, so as to reciprocate along the guide rail 5, thereby driving the first clamping piece 31 to reciprocate along the guide rail 5.

The embodiments of this disclosure do not specifically limit the number of guide rails 5, only one guide rail 5 may be provided, or two, three or more guide rails 5 may be provided, as long as the first clamping piece 31 can move along the guide rails 5.

It should be understood by persons skilled in the art that when the guide rails 5 is provided in plurality, a plurality of sliding pieces corresponding to the number of the guide rails 5 should be provided; or when only one sliding piece is provided, the sliding pieces should be correspondingly provided with matching structures (such as grooves or protrusions) corresponding to the number of the guide rails 5, so that the one sliding piece can move along the plurality of guide rails 5.

Exemplarily, the tray 100 may be provided with one guide rail 5, and the guide rail 5 is provided in a middle region of the base plate 1.

As another example, the tray 100 may be provided with two guide rails 5, and the guide rail 5 are respectively arranged at two opposite sides of the base plate 1 along the first direction.

As still another example, the tray 100 may be provided with three guide rails 5, and the three guide rails 5 are evenly spaced apart along the first direction of the base plate 1.

Although not shown in the figure, stoppers may be arranged at the edges of the two opposite sides of the base plate 1 along the second direction, and the stoppers protrude from the carrying surface of the base plate 1 and are at least higher than the guide rail 5. The stopper extends along the first direction, and can completely penetrate the length direction of the base plate 1, or can only be arranged at the end of the guide rail 5. Thus, when the user slides the sliding piece or the driving apparatus controls the sliding piece to move along the guide rail 5, the stopper can limit the sliding piece to prevent the sliding piece from falling off the guide rail 5, and further prevent the first clamping piece 31 from falling off the guide rail 5.

In the embodiments of this disclosure, the tray 100 includes both the first screw rod 4 and the guide rail 5, and the first clamping piece 31 is supported on the guide rail 5 while being connected to the first screw rod 4. The first screw rod 4 is located at the middle position of the base plate 1 along the first direction, and the guide rail 5 is located at the two opposite sides of the base plate 1 along the first direction. No driving force is applied to the sliding piece, and the first screw rod 4 is only driven to rotate so as to drive the two first clamping pieces 31 to reciprocate along the second direction. The provision of the guide rail 5 can reduce the friction and shaking caused when the first clamping piece 31 moves along the second direction, such that the movement of the first clamping piece 31 is smoother and more stable, has higher reliability and low energy consumption, and is more conducive to energy conservation and environmental protection.

Certainly, it should be understood by persons skilled in the art that in some other embodiments, the tray 100 may be only provided with the first screw rod 4 or the guide rail 5, as long as the two first clamping pieces 31 can move toward or away from each other along the second direction.

In some embodiments of this disclosure, the guide rails 5 is provided in a quantity of two, and the two guide rails 5 are spaced apart on both sides of the base plate 1 along the first direction.

Therefore, the first clamping piece 31 can be supported on the two guide rails 5, the stability is higher, and the friction when the first clamping piece 31 moves is further reduced, such that the first clamping piece 31 can move along the second direction more smoothly by cooperating with the two guide rails 5, and the reliability and stability when the first clamping piece 31 moves along the second direction are improved.

In some embodiments of this disclosure, the tray 100 includes a second screw rod 6 extending along the first direction, and the second screw rod 6 is rotatably arranged on the base plate 1 and located below the carrying region 101. The second clamping piece 32 is provided on the second screw rod 6 and can move toward or away from the fixing plate 2 along the second screw rod 6 with the rotation of the second screw rod 6.

Therefore, the second clamping piece 32 can move along the first direction through the rotation of the second screw rod 6, so that the workpiece can be easily clamped along the first direction, the structure is simple, and the design is ingenious. Exemplarily, the base plate 1 can be provided with a recessed groove extending along the first direction, and the recessed groove is located below the carrying region 101, and the second screw rod 6 can be rotatably arranged in the recessed groove.

Therefore, the second screw rod 6 is located below the carrying region 101, and when the workpiece is placed in the carrying region 101, the workpiece is not be interfered, thus reducing the defects such as the wobble and wear of the workpiece due to the collision with the second screw rod 6, and improving the carrying stability of the tray 100.

As shown in FIG. 3, a meshing piece 321 is also arranged below the second clamping piece 32. The meshing piece 321 can be integrated with the second clamping piece 32, or can be separated from the second clamping piece 32 and assembled together. For example, the meshing piece 321 can be a nut meshed with the second screw rod 6, so that the second clamping piece 32 can cooperate with the second screw rod 6 through the meshing piece 321, and the second clamping piece 32 can move toward or away from the fixing plate 2 along the second screw rod 6 by changing the rotation direction of the second screw rod 6. In addition, the second screw rod 6 and the meshing piece 321 may be provided with a mutual self-locking function, thereby reducing the risk of accidental movement of the second clamping piece 32.

Exemplarily, the second screw rod 6 can be driven to rotate by the driving apparatus, such that the second clamping piece 32 moves linearly along the second screw rod 6, and the rotation direction of the second screw rod 6 can be changed by the driving apparatus, thereby driving the second clamping piece 32 to move toward or away from the fixing plate 2. The driving apparatus includes but is not limited to a motor. As a specific example, a servo motor can be used.

As another example, the second screw rod 6 can alternatively be driven to rotate or change the direction of rotation by manual rotation of the user or rotation by using a tightening apparatus, such that the second clamping piece 32 reciprocates along the second screw rod 6. The second screw rod 6 can also have a self-locking function, so that the workpiece in the tray 100 can be held with a predetermined pressing force.

The screw rod transmission has high transmission efficiency and low energy consumption, and the rotation of the second screw rod 6 drives the second clamping piece 32 to reciprocate, which is more conducive to energy conservation and environmental protection. It should be understood by persons skilled in the art that the movement of the second clamping piece 32 along the first direction is not limited to the formation of a kinematic pair of the screw rod and the nut, as long as the second clamping piece 32 can reciprocate along the first direction. For example, rack-and-pinion transmission, chain drive, belt transmission, or the like may alternatively be used.

In some embodiments of this disclosure, the clamping assembly 3 includes a clamping surface 33, where the clamping surface 33 is configured to be in contact with the side surface of the workpiece. The first clamping piece 31 further includes a supporting surface 34, where the supporting surface 34 is configured to be in contact with part of a bottom surface of the workpiece. The clamping surface 33, a side surface of the fixing plate 2 facing the second clamping piece 32, and the supporting surfaces 34 of the two first clamping pieces 31 define the carrying region 101.

Because the clamping assembly 3 includes the clamping surface 33, the workpiece can be clamped by the contact between the clamping surface 33 and the side surface of the workpiece, such that the workpiece is not easy to move relative to the tray 100, the clamping structure is simple, and the clamping effect is good. The clamping here can also be a clamping with a certain pre-tightening force. In the case that the workpiece is a battery, the side surface herein also includes a side surface sometimes called "largest face". In addition, because the first clamping piece 31 further includes the supporting surface 34, the first clamping piece 31 is approximately L-shaped on the projection plane perpendicular to the first direction, and part of the workpiece is supported on the supporting surface 34, so that the stability of the workpiece placed in the carrying region can be improved, the interference of transmission pieces such as the first screw rod 4 and the second screw rod 6 on the workpiece can be reduced, and the defects such as wobble and abrasion of the workpiece can be reduced.

Certainly, it should be understood by persons skilled in the art that the shape of the first clamping piece 31 is not specifically limited in the embodiments of this disclosure, and the first clamping piece 31 may not include the supporting surface 34, and the first clamping piece 31 may be in any other suitable shape such as a flat plate shape.

As shown in FIG. 3, a region enclosed by the dotted line in FIG. 3 is the carrying region 101 of the tray 100. As the workpiece is placed in the carrying region 101 defined by the clamping surface 33, the supporting surface 34, and the like, which can improve the placement stability of the workpiece, reduce the overturning, falling, and the like of the workpiece in the conveying process, and improve the reliability of the tray 100.

In some embodiments of this disclosure, the second clamping piece 32 is provided in a quantity of two, and the two second clamping pieces 32 are spaced apart between the two first clamping pieces 31 along the second direction.

Therefore, when two groups of workpieces with different sizes are carried on the tray 100, the two second clamping pieces 32 can move by different distances respectively along the first direction according to the different sizes of each group of workpieces, such that the two groups of workpieces can be clamped well, and the two groups of workpieces with different sizes can be stably carried on the tray 100, improving the reliability and compatibility of the tray 100 and being conducive to flexible production.

Certainly, persons skilled in the art should understand that the number of the second clamping piece 32 is not specifically limited in the embodiments of this disclosure, and the number of the second clamping pieces 32 may be one or more (more than two).

Exemplarily, the number of second clamping pieces 32 may be three, and three second clamping pieces 32 can be spaced apart between two first clamping pieces 31 along the second direction, so that three groups of workpieces with different sizes can be clamped well.

In some embodiments of this disclosure, the tray 100 includes two second screw rods 6 extending along the first direction, the two second screw rods 6 are spaced apart and arranged in parallel along the second direction, and each second clamping piece 32 is connected to one second screw rod 6 and the two second clamping pieces 32 can move toward or away from the fixing plate 2 along the respective connected second screw rods 6.

Therefore, the two second clamping pieces 32 can move along the first direction through the corresponding second screw rods 6, such that the movements of the two second clamping pieces 32 do not interfere with each other. In this way, the two second clamping pieces 32 can move by different distances along the first direction according to the sizes or forms of different workpieces, so that a plurality of groups of workpieces with different sizes carried on the tray 100 can be clamped respectively, improving the adaptability, the compatibility of the tray 100, and the flexibility of the production line.

It should be understood by persons skilled in the art that when the second clamping piece 32 is provided in plurality, the quantity of the second screw rods 6 corresponds to the quantity of the second clamping pieces 32.

As shown in FIGs. 1 to 6, in some embodiments of this disclosure, the tray 100 further includes a partition assembly 7, where the partition assembly 7 includes a partition plate 71. The partition plate 71 extends along the first direction, and the partition plate 71 can be detachably arranged on the base plate 1. When the partition plate 71 is arranged on the base plate 1, the partition plate 71 is located between the two second clamping pieces 32 and divides the carrying region 101 into two carrying sub-regions 102. The two carrying sub-regions 102 are respectively configured for carrying at least one workpiece, and the two second clamping pieces 32 move along the second screw rod 6 in the two carrying sub-regions 102, respectively.

As the tray 100 includes the partition assembly 7, and the partition assembly 7 can divide the carrying region 101 of the tray 100 into two carrying sub-regions 102, when the tray 100 carries two groups of workpieces, the two groups of workpieces can be placed in corresponding carrying sub-regions 102 respectively and separated by the partition assembly 7, such that the two groups of workpieces do not interfere with each other and are placed more stably.

In addition, because the partition plate 71 of the partition assembly 7 is detachably arranged on the base plate 1, users can mount or remove the partition plate 71 based on actual needs, for example, when the tray 100 carries a single-row workpiece, the partition plate 71 is removed, and when the tray 100 carries a double-row workpiece, the partition plate 71 is mounted, such that the tray 100 can be stably compatible with a plurality of groups of workpieces, improving the flexibility and compatibility.

It should be understood by persons skilled in the art that the partition assemblies 7 can be provided in plurality, and the plurality of partition assemblies 7 can divide the carrying region 101 into more carrying sub-regions 102, so that when the tray 100 carries more groups of workpieces, all groups of workpieces can be spaced apart in the plurality of carrying sub-regions 102 separated by the plurality of partition assemblies 7, and the stability is higher, such that the tray 100 can carry more groups of workpieces more reliably and stably.

In the embodiments of this disclosure, the two second clamping pieces 32 can move toward or away from the fixing plate 2 along the respective connected second screw rod 6, and the partition assembly 7 does not interfere with the movement of the two second clamping pieces 32 while separating the carrying region 101, so as not to interfere with the clamping of the workpiece by the second clamping pieces 32 along the first direction.

In some other embodiments, one second clamping piece 32 can be one, and the one second clamping piece 32 is approximately in a shape of a door frame, and the frame body of the second clamping piece 32 extending in the door-frame shaped second direction spans above the partition assembly 7, and the frame body on both sides can move toward or away from the fixing plate 2 along the two second screw rods 6, respectively. The embodiments of this disclosure do not specifically limit the number and shape of the second clamping piece 32, as long as the second clamping piece 32 can clamp the workpiece along the second direction.

In some embodiments of this disclosure, as shown in FIGs. 1 to 6, the clamping assembly 3 includes a clamping surface 33, where the clamping surface 33 is configured to be in contact with a side surface of a workpiece. The first clamping piece 31 and the partition plate 71 further include supporting surfaces 34, where the supporting surfaces 34 are configured to be in contact with part of a bottom surface of the workpiece; and the supporting surface 34 of the partition plate 71 is provided in a quantity of two, and the two supporting surfaces 34 are located at two opposite sides of the partition plate 71 along the second direction.

Because the clamping assembly 3 includes the clamping surface 33, the workpiece can be clamped by the contact between the clamping surface 33 and the side surface of the workpiece, the structure is simple, and the clamping effect is good. In addition, because the first clamping piece 31 and the partition plate 71 further include the supporting surfaces 34, when the workpiece is carried in the carrying sub-region 102, the supporting surfaces 34 of the first clamping piece 31 and the partition plate 71 are supported, so that the stability of the workpiece placed in the carrying region 101 can be improved, the interference of transmission pieces such as the first screw rod 4 and the second screw rod 6 on the workpiece can be reduced, and the defects such as wobble and abrasion of the workpiece can be reduced.

In the embodiments of this disclosure, the partition plate 71 includes two supporting surfaces 34. On the projection plane perpendicular to the first direction, the partition plate 71 is approximately in a shape of inverted T, so that stable support can be provided for the workpieces carried in the two carrying sub-regions 102. In some other embodiments, the partition plate 71 may include one supporting surface 34 or may not include supporting surface 34, and the partition plate 71 may be in any other suitable shape such as a flat plate shape.

As shown in a region enclosed by the dotted line in FIG. 5, a clamping surface 33 of one first clamping piece 31, a supporting surface 34 of one first clamping piece 31, a clamping surface 33 of one second clamping piece 32, a side surface of the partition plate 71 facing the first clamping piece 31, one supporting surface 34 of the partition plate 71, and a surface of the fixing plate 2 facing the second clamping piece 32 define part of the carrying sub-region 102.

In this way, when the tray 100 carries a plurality of groups of workpieces, and the workpiece is placed in the carrying sub-region 102 defined by the clamping surface 33, the supporting surface 34, and the like, which can improve the placement stability of the workpiece, reduce the overturning, falling, and the like of the workpiece in the conveying process, and improve the reliability of the tray 100.

In some embodiments of this disclosure, as shown in FIGs. 1, 2, and 6, the partition assembly 7 further includes a pin 72. The partition plate 71 is provided with a run-through hole 711, and the base plate 1 is provided with a through hole 11. When the partition plate 71 is arranged on the base plate 1, the pin 72 penetrates through the run-through hole 711 and the through hole 11 to fix the partition plate 71 to the base plate 1.

Therefore, the partition plate 71 can be easily fixed on the base plate 1 through the cooperation of the pin 72 with the run-through hole 711 and the through hole 11, thereby dividing the carrying region 101 into a plurality of carrying sub-regions 102, which is more conducive to the placement and clamping of a plurality of groups of workpieces. In addition, the pin 72 used in this fixing method is simple in structure and easy to mount and remove, which is convenient for users to mount and remove the partition plate 71, such that the partition plate 71 can be detachably mounted on the base plate 1, and the assembly cost is effectively reduced.

Certainly, it should be understood by persons skilled in the art that the detachable connection method of the partition plate 71 and the base plate 1 is not limited to the cooperation of the pin 72 with the run-through hole 711 and the through hole 11, and can be any other suitable connection method.

Exemplarily, the partition plate 71 can be detachably arranged on the base plate 1, for example, by screwing.

As another example, the partition plate 71 can be detachably arranged on the base plate 1, for example, by snap-fitting.

As still another example, the partition plate 71 can be detachably provided on the base plate 1, for example, by magnetic attraction.

In some embodiments of this disclosure, the pin 72, the run-through hole 711, and the through hole 11 are provided in plurality. A plurality of run-through holes 711 are spaced apart on the partition plate 71 along the first direction, and a plurality of through holes 11 are spaced apart on the base plate 1 along the first direction.

Therefore, the stability of the partition plate 71 on the base plate 1 can be improved, such that the partition plate 71 can be more stably mounted on the base plate 1, the possibility that the workpiece cannot be clamped well due to the deviation of the partition plate 71 is reduced, and the placement reliability of the workpiece is improved.

In the embodiments of this disclosure, as shown in FIGs. 1, 2, and 6, the fixing plate 2 is further provided with a through hole 11, and the partition plate 71 is further provided with a protruding portion 712, and the protruding portion 712 is further provided with a run-through hole 711. When the partition plate 71 is arranged on the base plate 1, the protruding portion 712 is overlapped on the top side of the fixing plate 2, and the pin 72 penetrates through the run-through hole 711 of the protruding portion 712 and the through hole 11 of the fixing plate 2, such that the partition plate 71 can be more stably fixed.

In some embodiments of this disclosure, the intersection includes a vertical intersection.

It was mentioned in the foregoing that the first direction and the second direction are mutually intersecting directions, and the intersection herein includes the case of vertical intersection.

Therefore, the workpiece can be clamped along two vertical directions in a plane, which is especially suitable for clamping the workpiece with a cuboid shape.

A second aspect of this disclosure provides a clamping method for clamping a workpiece by using a tray 100, and the tray is provided with a carrying region 101 and includes a base plate 1, a fixing plate 2 arranged on the base plate 1, and a clamping assembly 3, and the clamping assembly 3 includes two first clamping pieces 31 and at least one second clamping piece 32.

As shown in FIG. 8, the clamping method includes the following steps.

S100: A placement step: Place a workpiece in the carrying region of the tray.

S200: A clamping step: Move two first clamping pieces towards each other along the second direction, so as to clamp along the second direction, and move the second clamping piece towards the fixing plate along the first direction, so as to clamp along the first direction.

Therefore, the workpiece can be easily fixed and clamped by using the tray 100, so that the placement stability of the workpiece can be improved, and the workpiece can be smoothly conveyed between various processes. Further, the workpieces with different sizes can be adapted by adjusting the positions of the first clamping piece 31 and the second clamping piece 32, which has good compatibility and is conducive to flexible production.

In addition, a loosening step may be included, the loosening step is contrary to the action in the clamping step, that is, the two first clamping pieces are moved away from each other along the second direction, thereby loosening along the second direction, and the second clamping pieces are moved away from the fixing plate along the first direction, thereby loosening along the first direction.

In some embodiments of this disclosure, the tray 100 further includes a partition assembly 7, and the partition assembly 7 includes a partition plate 71 and a pin 72. The partition plate 71 is provided with a run-through hole 711, and the base plate 1 is provided with the through hole 11.

Before the placement step, the clamping method further includes a step of mounting the partition plate 71, so that the pin 72 penetrates through the run-through hole 711 and the through hole 11, thereby fixedly mounting the partition plate 71 on the base plate.

Therefore, when a plurality of groups of workpieces are carried on the tray 100, each group of workpieces can be separated in different carrying sub-regions 102 by fixedly mounting the partition plate 71 on the base plate 1, such that each group of workpieces do not interfere with each other, and the placement is more stable, which allows the tray 100 to be compatible with a plurality of groups of workpieces stably and have better flexibility.

In some embodiments of this disclosure, the workpiece includes at least one of a battery 10 or a battery unit formed by two or more batteries 10.

Therefore, the clamping method using the tray 100 can be used for clamping and fixing the batteries 10, and can be compatible with batteries 10 with different sizes, for example, single-row batteries and double-row batteries, thus improving the compatibility of the clamping method and the production method of the whole production line.

A third aspect of this disclosure provides a battery production line, where the battery production line includes at least one tray 100 according to the first aspect of this disclosure, and the tray 100 is configured for carrying a workpiece, and the workpiece includes at least one of a battery or a battery unit formed by two or more batteries; and a conveying apparatus to convey the tray 100.

The conveying apparatus includes at least one of a conveying belt, a conveying chain or an automated guided vehicle (Automated Guided Vehicle, AGV for short).

Because the workpiece is placed and clamped on the tray 100 and can be conveyed by the conveying apparatus, the workpiece can be placed and clamped with a simple structure and a simple action, which is conducive to the stable conveying of the workpiece between different processes of the battery production line. Further, the tray 100 can adapt to the placement and clamping of workpieces with different sizes, and has good compatibility, improving the flexible production of the whole battery production line.

In addition, the battery production line may further include a conveying line, the conveying line may be configured to convey the tray 100. The conveying line for conveying the tray 100 can be connected to each process, so that the tray 100 can flow into each process from the conveying line, and the workpieces carried on the tray 100 can be operated in corresponding processes, such as pressing operation or stacking operation.

Exemplarily, the conveying line can be a conveying belt, such as a belt, a plurality of rollers arranged in parallel, or a plurality of chains.

There may be only one tray 100 conveyed on the conveying line, or a plurality of trays 100 conveyed simultaneously, thus improving the production efficiency of the battery production line.

In some embodiments of this disclosure, the workpiece includes at least one of a battery or a battery unit formed by two or more batteries.

Therefore, the tray can be configured for clamping and fixing batteries, and the tray can be compatible with batteries 10 with different sizes, for example, the tray can be compatible with single-row batteries and double-row batteries, thus improving the compatibility of the tray and the whole battery production line.

In some embodiments of this disclosure, the battery production line further includes a manipulator configured to place the workpiece on or remove the workpiece from the tray 100.

Therefore, the automation of the battery production line can be improved, and the production efficiency of the whole line can be improved.

Specific examples of some embodiments of this disclosure are described below with reference to the drawings.

As a specific example, two groups of single-row batteries are placed and clamped. The tray 100 includes a base (base plate 1), a fixed-end pressing block (fixing plate 2), two width direction clamping blocks (first clamping pieces 31), two movable-end pressing blocks (second clamping pieces 32), a middle partition plate 71, and a partition locking pin (pin 72). The fixed-end pressure block is arranged on the base, the two width direction clamping blocks can move toward or away from each other along the second direction through the screw rod adjusting mechanism (the first screw rod 4), and the two movable-end pressure blocks can move toward or away from the fixed-end pressure block along the first direction through the side clamping screw rod adjusting mechanism (the second screw rod 6). When the tray flows into the station where the workpiece is placed, the middle partition plate is firstly mounted, the middle partition is fixedly connected to the base of the tray through the partition locking pin, the carrying region of the tray is divided into two carrying sub-regions, the screw rod adjusting mechanism is driven to make the two width direction clamping blocks move away from each other to the limit position (that is, the area of the two carrying sub-regions is maximized), and then two groups of batteries are respectively placed in the two carrying sub-regions through a mechanism (such as a manipulator) not shown, continue to drive the screw adjustment mechanism to make the two width direction clamping blocks move toward each other until they contact the side surface of the battery, thus completing the clamping of the battery along the second direction. Then, the adjusting mechanism of the side clamping screw rod is driven to make the two movable-end pressing blocks move toward the fixed-end pressing block until contacting the largest face of the battery, thus completing the clamping of the battery along the first direction. After the clamping operation in two directions is completed, the workpiece flows into the subsequent process with the tray for the corresponding process operation.

Therefore, two groups of batteries placed in two carrying sub-regions can be clamped with simple structure and simple action through the cooperation of the width direction clamping block and the moveable-end pressing blocks, so that the probability that the batteries move in the conveying process can be reduced, and the possibility that the batteries overturn or fall from the tray or cannot complete the corresponding process operation due to the position change after reaching the corresponding process can be reduced.

Further, because the width direction clamping block and the movable end pressing block can move along the first direction and the second direction respectively, the tray 100 can adapt to batteries with different sizes or different forms by adjusting the positions of the width direction clamping block and the movable end pressing block along the first direction and the second direction, improving the compatibility and the flexible production.

The foregoing embodiments are merely intended to describe the technical solutions of this disclosure but not to limit this disclosure. Although this disclosure has been described in detail with reference to the foregoing embodiments, persons of ordinary skill in the art understand that modifications may still be made to the technical solutions described in the foregoing embodiments, or equivalent replacements may still be made to some or all technical features in the technical solutions. Such modifications and replacements do not make the essence of the corresponding technical solutions depart from the scope of the technical solutions of the embodiments of this disclosure, but still fall within the scope of this disclosure. In particular, the various technical features mentioned in the various embodiments may be combined in any manner as long as there is no structural conflict.

### Industrial practicality

This disclosure provides a tray, a clamping method, and a battery production line with good compatibility and simple structure.

## Claims

1. A tray, provided with a carrying region for carrying at least one workpiece, wherein the tray comprises:
a base plate;
a fixing plate, arranged on a side of the base plate along a first direction, wherein the fixing plate is configured to block the workpiece; and
a clamping assembly, comprising two first clamping pieces and at least one second clamping piece;
wherein the two first clamping pieces extend along the first direction and are spaced apart on two opposite sides of the base plate in a manner of moving towards each other along a second direction; the second clamping piece is arranged on a side opposite the fixing plate and located between the two first clamping pieces, and the second clamping piece is configured to be capable of moving towards or away from the fixing plate along the first direction; and the first direction intersects with the second direction.

2. The tray according to claim 1, wherein
the tray comprises a first screw rod extending along the second direction, and the first screw rod is rotatably arranged on the base plate and located below the carrying region; and
the two first clamping pieces are connected to the first screw rod and are able to move toward or away from each other along the first screw rod with the rotation of the first screw rod.

3. The tray according to claim 1, wherein
the tray includes a guide rail extending along the second direction; and
the two first clamping pieces are supported on the guide rail and are able to move toward or away from each other along the guide rail.

4. The tray according to claim 3, wherein
the guide rail is provided in a quantity of two, and the two guide rails are spaced apart on two sides of the base plate along the first direction.

5. The tray according to claim 1, wherein
the tray comprises a second screw rod extending along the first direction, and the second screw rod is rotatably arranged on the base plate and located below the carrying region; and
the second clamping piece is arranged on the second screw rod and is able to move toward or away from the fixing plate along the second screw rod with the rotation of the second screw rod.

6. The tray according to claim 1, wherein
the clamping assembly comprises a clamping surface, and the clamping surface is configured to be in contact with a side surface of the workpiece;
the first clamping piece further comprises a supporting surface, wherein the supporting surface is configured to be in contact with part of a bottom surface of the workpiece; and
the clamping surface, a side surface of the fixing plate facing the second clamping piece, and the supporting surfaces of the two first clamping pieces define the carrying region.

7. The tray according to claim 1, wherein
the second clamping piece is provided in a quantity of two, and the two second clamping pieces are spaced apart between the two first clamping pieces along the second direction.

8. The tray according to claim 7, wherein
the tray comprises two second screw rods extending along the first direction, and the two second screw rods are spaced apart and arranged in parallel along the second direction; and the second clamping pieces each are connected to one second screw rod, and the two second clamping pieces are able to move toward or away from the fixing plate along the second screw rods connected thereto.

9. The tray according to claim 8, wherein
the tray further comprises a partition assembly, wherein the partition assembly comprises a partition plate, the partition plate extends along the first direction, and the partition plate is detachably arranged on the base plate;
wherein when the partition plate is arranged on the base plate, the partition plate is located between the two second clamping pieces and divides the carrying region into two carrying sub-regions, the two carrying sub-regions each are configured to carry at least one workpiece, and the two second clamping pieces respectively move along the second screw rod in the two carrying sub-regions.

10. The tray according to claim 9, wherein
the clamping assembly comprises a clamping surface, and the clamping surface is configured to be in contact with a side surface of the workpiece; and
the first clamping piece and the partition plate further comprise supporting surfaces, the supporting surfaces are configured to be in contact with part of a bottom surface of the workpiece, the partition plate has two supporting surfaces, and the two supporting surfaces are located on two opposite sides of the partition plate along the second direction.

11. The tray according to claim 9, wherein
the partition assembly further comprises a pin;
the partition plate is provided with a run-through hole, and the base plate is provided with a through hole; and
when the partition plate is arranged on the base plate, the pin penetrates through the run-through hole and the through hole to fix the partition plate to the base plate.

12. The tray according to claim 11, wherein
the pin, the run-through hole, and the through hole are provided in plurality; and
the plurality of run-through holes are spaced apart on the partition plate along the first direction, and the plurality of through holes are spaced apart on the base plate along the first direction.

13. The tray according to claim 1, wherein
the intersection comprises a vertical intersection.

14. A clamping method for clamping a workpiece by using a tray, wherein the tray is provided with a carrying region and comprises a base plate, a fixing plate arranged on the base plate, and a clamping assembly, and the clamping assembly comprises two first clamping pieces and at least one second clamping piece; and the clamping method comprises:
a placement step of placing the workpiece in the carrying region of the tray; and
a clamping step of moving the two first clamping pieces towards each other along a second direction to clamp along the second direction, and moving the second clamping piece towards the fixing plate along a first direction to clamp along the first direction.

15. The clamping method according to claim 14, wherein
the tray further comprises a partition assembly, and the partition assembly comprises a partition plate and a pin;
the partition plate is provided with a run-through hole, and the base plate is provided with a through hole; and
before the placement step, the clamping method further comprises:
a partition plate mounting step of enabling the pin to extend through the run-through hole and the through hole to fix the partition plate to the base plate.

16. The clamping method according to claim 14 or 15, wherein
the workpiece comprises at least one of a battery or a battery unit formed by two or more batteries.

17. A battery production line, wherein the battery production line comprises:
the tray according to any one of claims 1 to 13, wherein the tray is configured for carrying a workpiece, and the workpiece comprises at least one of a battery or a battery unit formed by two or more batteries; and
a conveying apparatus, configured to convey the tray.

18. The battery production line according to claim 17, wherein
the battery production line further comprises a manipulator, wherein the manipulator is configured to place the workpiece on the tray or remove the workpiece from the tray.
